# EUROPÄISCHE PATENTSCHRIFT

(11) **EP 3 648 995 B1**
(45) Veröffentlichungstag und Bekanntmachung des Hinweises auf die Patenterteilung: **17.11.2021**
(21) Anmeldenummer: 18728163.9
(22) Anmeldetag: 04.06.2018
(51) Int. Cl.: B60G 11/62, B60G 7/04, B60G 17/0185, B61F 5/10, B61F 5/14, B60G 17/019

(54) **LUTFEDER, INSBESONDERE FÜR STRASSENFAHRZEUGE UND/ODER FÜR SCHIENENFAHRZEUGE**
AIR SPRING, ESPECIALLY FOR STREET AND/OR FOR RAIL VEHICLES
RESSORT À AIR, EN PARTICULIER POUR VÉHICULES DE ROUTE ET/OU POUR MATÉRIEL FERROVIAIRE

(30) Priorität: 07.07.2017 DE 102017211602; 26.04.2018 WO PCT/EP2018/060653
(43) Veröffentlichungstag der Anmeldung: 13.05.2020
(73) Patentinhaber: ContiTech Luftfedersysteme GmbH, 30165 Hannover (DE)
(72) Erfinder: NEUMANN, Hendrik, 30855 Langenhagen (DE); PORRAS-MARTINEZ, Antonio, 30826 Garbsen (DE)
(74) Vertreter: Continental Corporation
(86) Internationale Anmeldenummer: PCT/EP2018/064555
(87) Internationale Veröffentlichungsnummer: WO 2019/007600

(56) Entgegenhaltungen:
- EP-A1- 2 724 877
- EP-A1- 2 792 516
- EP-A1- 3 006 891
- EP-A1- 3 697 632
- EP-A2- 1 541 386
- WO-A2-2006/098840
- WO-A2-2007/127220
- WO-A2-2007/127220
- DE-A1-102008 037 484
- DE-A1-102008 037 484
- DE-C1- 19 701 530
- US-A- 6 109 598
- US-A- 6 109 598
- US-A1- 2006 273 148
- US-A1- 2006 273 148
- US-A1- 2011 083 500
- US-B2- 7 641 182

## Beschreibung

Die Erfindung betrifft eine Luftfeder, insbesondere für Straßenfahrzeuge und bzw. oder für Schienenfahrzeuge, gemäß des Oberbegriffs des Patentanspruchs 1 sowie ein Fahrzeug mit wenigstens einer derartigen Luftfeder gemäß des Patentanspruchs 6.

Zur Dämpfung von Schwingungen können je nach Anwendung verschiedene Arten von Federungssysteme eingesetzt werden. Hierzu gehören auch die Luftfederungen, welche die Kompressibilität von Gasen und insbesondere von Luft ausnutzen.

Eine weit verbreitete Bauart einer Luftfederung sind Luftfedern mit konstantem Volumen in Regellage. In diesem Fall wird die Luft üblicherweise in einem Rollbalg eingeschlossen, welcher mit weiteren Beschlagteilen wie bei Straßenfahrzeugen mit einem Deckel oder einer Bördelplatte und einem Abrollkolben luftdicht verbunden ist. Dabei ist der Kolben sowohl mit dem unteren Ende des Rollbalgs verbunden als auch üblicherweise mit einer Achse bei Straßenfahrzeugen bzw. mit einem Fahrgestell bei Schienenfahrzeugen. Das obere Ende des Rollbalgs ist mit einem Deckel oder einer Bördelplatte verbunden, welche mit der Karosserie bzw. mit dem Chassis des Fahrzeugs verbunden ist. Bei Schienenfahrzeugen wird der Balg zwischen einer Gleitplatte oben und dem Kolben unten angeordnet.

Der Rollbalg ist über den Kolben gestülpt und rollt unter Druck auf diesem ab. Die Luftfeder kann durch einen Kompressor mit Druckluft versorgt werden, so dass in Abhängigkeit von der Beladung Luft zu- oder abgepumpt werden kann, um das Füllvolumen und somit die Niveaulage des Fahrzeugs konstant zu halten. Derartige Luftfedern werden bei verschiedenen Arten von Fahrzeugen wie insbesondere bei Straßenfahrzeugen wie insbesondere Lastkraftwagen, Anhänger und Omnibusse sowie Schienenfahrzeugen eingesetzt.

Bei Straßenfahrzeugen wird üblicherweise im Inneren der Luftfeder und von dem Rollbalg, der Bördelplatte und dem Kolben umschlossen ein Puffer befestigt, der sicherstellen soll, dass im Betrieb des Luftfedersystems ohne Luftdruck oder bei Überbeanspruchung der Kolben nicht gegen die Bördelplatte schlägt. Hierzu wird der Puffer üblicherweise senkrecht wirkend zwischen Bördelplatte und Kolben auf dem Kolben angeordnet, wobei auch eine Anordnung auf der Bördelplatte möglich ist. Der Puffer besteht üblicherweise aus Gummi oder aus Plastik.

In Schienenfahrzeugen gibt es unterschiedliche Bauformen wie Gürtelbälge oder Halbrollbälge. Auch hier wird eine Gummifeder, die sogenannte Notfeder, verwendet, auf welcher die Gleitplatte im Betrieb des Luftfedersystems ohne Luftdruck oder bei Überbeanspruchung aufsetzen kann, um bei Ausfall der Luftfederung noch eine gewisse Federwirkung zu gewährleisten. Die Gummifeder wird üblicherweise auf dem Kolben angeordnet, wobei auch eine Anordnung auf der Gleitplatte möglich ist; in diesem Fall wird die Gleitfläche der Gleitplatte von der Gummifeder gebildet. Die Notfeder kann statt als Gummifeder aus Gummi auch aus Plastik ausgebildet sein.

Im Normalbetrieb ist aufgrund von Luftüberdruck in der Luftfeder ein Abstand zwischen der Bördelplatte bzw. der Gleitplatte und dem Puffer bzw. der Notfeder gegeben, der zur Abfederung eines Chassis eines Fahrzeuges gegen beispielsweise eine Achse oder, wie bei Schienenfahrzeugen, gegen das Drehgestell genutzt wird. Der Puffer bzw. die Notfeder dient dabei der primären Federung.

Ist kein Überdruck in der Luftfeder vorhanden oder ist dieser zu gering, setzt die Bördelplatte bzw. die Gleitplatte auf dem Puffer bzw. auf der Notfeder auf. Auf diese Weise ist eine Notfederung gewährleistet, die auch Querbewegungen der Bördelplatte relativ zum Puffer bzw. der Gleitplatte relativ zur Notfeder zulässt.

Die DE 10 2008 037 484 A1 zeigt eine derartige Luftfeder. Zur Verbesserung der Gleitfähigkeit weist die Notfeder eine ebenfalls als Gleitfläche ausgebildete Oberfläche auf. Außerdem wird vorgeschlagen, dass die Oberfläche der Gleitflächen Vertiefungen zur Aufnahme von Schmiermitteln vorsehen. Alle diese Maßnahmen dienen zur Verbesserung des Gleitverhaltens und der Minimierung des Verschleißes der Gleitflächen.

Es ist jedoch nicht vermeidbar, dass auch im normalen Einsatz die Bördelplatte bzw. die Gleichplatte mit dem Puffer bzw. mit der Notfeder in Kontakt kommt, beispielsweise bei der Wartung in der Werkstatt bzw. im Depot, wo kein entsprechender Luftdruck zur Verfügung steht, oder aber auch im Fall von Defekten der Luftfeder oder Druckluftversorgung.

Dieser Kontakt zwischen Bördelplatte und Puffer bzw. zwischen Gleitplatte und Notfeder ist zwangsweise auch mit Verschleiß verbunden. Wird der Verschleiß der Gleitflächen des Puffers bzw. der Notfeder zu groß, kann es in ungünstigen Fällen zu Unfällen im Betrieb kommen. Deshalb ist eine Überwachung des Verschleißes notwendig.

Da jedoch die Innenseite der Bördelplatte und der Puffer bzw. die Gleitplatte und die Notfeder im Inneren der Luftfeder angeordnet sind, ist eine Verschleißüberwachung nur mit großem Aufwand, beispielsweise durch die Demontage der Luftfeder, möglich.

Die EP 1 541 386 A2 beschreibt eine Luftfeder, umfassend einen Abrollkolben und einen Rollbalg mit einer Abrollfalte, die an der Wand des Abrollkolbens abrollbar ist sowie zumindest ein flächig ausgebildetes Sensorelement, welches bei der Abrollbewegung des Rollbalgs betätigbar ist und ein höhenabhängiges Signal erzeugt, wobei das Sensorelement in die Wand des Abrollkolbens integriert ist oder auf der dem Hohlraum des Abrollkolbens zugewandten Seite der Wand angeordnet ist.

Die EP 2 792 516 A1 beschreibt eine Luftfeder mit einem Abstandssensor, umfassend: eine Signalempfangseinheit, eine Sendeeinheit für elektromagnetische Wellen und eine magnetische Signalübertragungseinheit; wobei die Signalübertragungseinheit dazu ausgelegt ist, einen erfassten Abstand zwischen der Signalempfangseinheit und der magnetischen Signalübertragungseinheit an die Signalempfangseinheit zu übertragen, wobei die magnetische Signalübertragungseinheit ferner eine Empfangseinheit für elektromagnetische Wellen und einen Wandler zum Umwandeln von elektromagnetischen Wellen in elektrische Energie umfasst, und wobei die Empfangseinheit für elektromagnetische Wellen elektromagnetische Wellen empfängt, die von der Sendeeinheit für elektromagnetische Wellen übertragen werden, um die magnetische Signalübertragungseinheit zu betreiben.

Die EP 2 724 877 A1 beschreibt eine Luftfeder für ein Fahrzeug, welche umfasst: ein erstes Befestigungselement zur Befestigung an einem Fahrzeugchassis, ein zweites Befestigungselement zur Befestigung an einem beweglichen Teil eines Fahrzeugs, das in Bezug auf das Chassis beweglich ist, einen Balg, der sich von dem ersten Befestigungselement zu dem zweiten Befestigungselement erstreckt und ein Luftvolumen enthält, und eine Sensoranordnung, die in dem Luftvolumen angeordnet ist. Die Sensoranordnung ist zum Erfassen mindestens eines von einem Straßenzustand, einem Fahrzeugzustand und einem Nutzlastzustand ausgebildet.

Die EP 3 006 891 A1 beschreibt eine Abstandsmessanordnung mit einer Sendeeinheit zum Aussenden von Infrarot-, IR-, Licht in Richtung einer Referenzvorrichtung, einer Empfangseinheit zum Empfangen von von der Referenzvorrichtung reflektiertem IR-Licht, wobei die Empfangseinheit zum Empfangen eines ersten IR-Signals und eines zweiten IR-Signals ausgebildet ist, wobei die Abstandsmessanordnung zum Bestimmen eines Abstands zwischen der Abstandsmessanordnung und der Referenzvorrichtung basierend auf den relativen Intensitäten des ersten und zweiten IR-Signals, die unterschiedliche Abhängigkeiten von dem zu messenden Abstand aufweisen, ausgebildet ist. Weiterhin ist eine Luftfeder für ein Fahrzeug vorgesehen, wobei die Luftfeder eine solche Abstandsmesseinrichtung aufweist, die zur Bestimmung eines Arbeitshubes der Luftfeder ausgebildet ist. Die DE 197 01 530 C1 beschreibt eine Einrichtung zur Bestimmung des axialen Abstandes zweier Endglieder einer Gasdruckfeder mit einer Gasdruckfederplatte und einem Gasdruckfederkolben, zwischen denen ein flexibler Balg eingespannt ist, so daß ein von den Endgliedern und dem flexiblen Balg begrenzter Raum entsteht, wobei die beiden Endglieder in axialer Richtung der Gasdruckfeder zueinander beweglich sind und innerhalb des Raumes an einem Endglied ein Ultraschallsender und an dem anderen Endglied ein Ultraschallempfänger angeordnet ist, mit deren Hilfe durch Erfassen der Laufzeit von Ultraschallimpulsen, die von dem Ultraschallsender zum Ultraschallempfänger laufen, der axiale Abstand zwischen den Endgliedern bestimmbar ist.

Die EP 3 697 632 A1 beschreibt ein Eine Fahrzeugaufhängungsanordnung umfasst Montagehalterungen, die so konfiguriert sind, dass sie mit einer Fahrzeugrahmenbaugruppe gekoppelt sind, Längslenker, die mit den Montagehalterungen gekoppelt sind, ein erstes Achselement, das mit den Längslenkern gekoppelt ist, eine Luftfederanordnung, die mit der Fahrzeugrahmenbaugruppe und einem der Längslenker gekoppelt ist, wobei das erste Ende, das zweite Ende und die Luftfederanordnung zusammenwirken, um einen Innenraum zu definieren, ein zweites Achselement, das von dem ersten Achselement beabstandet ist eine Sensoranordnung, die in dem Innenraum positioniert und so konfiguriert ist, dass sie einen Betriebsparameter der Luftfederanordnung erfasst, und eine Steueranordnung, die betriebsfähig mit der Sensoranordnung gekoppelt und so konfiguriert ist, dass sie Informationen von der ersten Sensoranordnung empfängt, wobei die Steueranordnung so konfiguriert ist, dass sie mindestens eine Betriebscharakteristik des zweiten Achsglieds basierend auf den von der Sensoranordnung empfangenen Informationen steuert.

Der Erfindung liegt die Aufgabe zugrunde, eine Luftfeder der eingangs geschilderten Art so zu verbessern, dass ein unzulässiger Verschleiß im Inneren der Luftfeder ohne Demontage der Luftfeder einfach von außen erfassbar ist.

Die Aufgabe wird erfindungsgemäß durch eine Luftfeder mit den Merkmalen gemäß Patentanspruch 1 sowie durch ein Fahrzeug mit den Merkmalen des Patentanspruchs 6 gelöst. Vorteilhafte Weiterbildungen sind in den Unteransprüchen beschrieben.

Somit betrifft die vorliegende Erfindung eine Luftfeder, insbesondere für Straßenfahrzeuge und bzw. oder für Schienenfahrzeuge, mindestens aufweisend mindestens ein erstes Kontaktelement und mindestens ein zweites Kontaktelement, welche ausgebildet sind, einander kontaktieren zu können, wie eingangs beschrieben.

Die erfindungsgemäße Luftfeder ist dadurch gekennzeichnet, dass in dem ersten Kontaktelement mindestens ein erster Transponder eingebettet ist, der von der dem zweiten Kontaktelement zugewandten Oberfläche des ersten Kontaktelements um ein erstes vorbestimmtes Maß beabstandet ist, oder umgekehrt.

Ein derartiger Transponder ist mittels eines an sich bekannten Lesegerätes zu einer Signalabgabe anregbar, welches von einem Lesegerät erfassbar ist. Dabei ist lediglich das Vorhandensein des Transponders von Interesse. Steigt der Verschleiß des ersten Kontaktelements über das vorbestimmte Maß, wird dadurch auch der erste Transponder abgerieben und dabei zerstört. Eine entsprechende Abfrage mit dem Lesegerät ergäbe dann keine Rückmeldung, so dass sofort erkennbar ist, dass der Verschleiß das vorbestimmte Maß des ersten Transponders erreicht oder überschritten hat.

Ein Anwender einer derartigen erfindungsgemäßen Luftfeder kann somit ohne Demontage der Luftfeder sowie ohne diese aus dem Fahrzeug auszubauen durch das Auslesen von außen überprüfen, ob der erste Transponder noch erkannt werden kann oder nicht, was als Defekt bzw. als unzulässiger Verschleiß gewertet werden kann. Dies kann die Wartung vereinfachen sowie Wartungs- und Standzeiten reduzieren. Auch kann dies die Sicherheit der Verwendung der Luftfeder erhöhen.

Gemäß eines Aspekts der vorliegenden Erfindung ist in dem ersten Kontaktelement ferner mindestens ein zweiter Transponder eingebettet, der von der dem zweiten Kontaktelement zugewandten Oberfläche um ein zweites vorbestimmtes Maß beabstandet ist, wobei der erste vorbestimmte Abstand kleiner ist als der zweite vorbestimmte Abstand.

Diese Anordnung hat den Vorteil, dass bei der Erfassung mit dem Lesegerät die Signale des ersten und zweiten Transponders unterscheidbar sind. Auf diese Weise ist es möglich, den Grad des Verschleißes zu bestimmen und zwischen einer Warnstufe und einer Verschleißobergrenze zu differenzieren. Fehlt das Signal des ersten Transponders, der dichter an der Oberfläche angeordnet ist als der zweite Transponder, ist dies als Warnstufe definierbar. Fehlt auch das Signal des zweiten Transponders, ist dies als Erreichen der Verschleißgrenze interpretierbar.

Gemäß eines weiteren Aspekts der vorliegenden Erfindung weist der erste Transponder, vorzugsweise und bzw. oder der zweite Transponder, einen RFID-Transponder auf oder ist ein RFID-Transponder. Dies kann die Umsetzung und Nutzung eines Transponders vereinfachen, da RFID-Transponder günstig verfügbar sind, flexibel eingesetzt werden und ein geringes Gewicht und bzw. oder eine geringe Größe aufweisen können.

Gemäß eines weiteren Aspekts der vorliegenden Erfindung sind das erste Kontaktelement ein Puffer und das zweite Kontaktelement eine Bördelplatte der Luftfeder, wobei wenigstens der erste Transponder, vorzugsweise und wenigstens der zweite Transponder, in dem Puffer eingebettet ist. Dies kann die Umsetzung der vorliegenden Erfindung auf Luftfedern für Straßenfahrzeuge begünstigen.

Gemäß eines weiteren Aspekts der vorliegenden Erfindung sind das erste Kontaktelement eine Notfeder und das zweite Kontaktelement eine Gleitplatte der Luftfeder, wobei wenigstens der erste Transponder, vorzugsweise und wenigstens der zweite Transponder, in der Notfeder eingebettet ist. Dies kann die Umsetzung der vorliegenden Erfindung auf Luftfedem für Schienenfahrzeuge begünstigen.

Die vorliegende Erfindung betrifft auch ein Fahrzeug mit wenigstens einer Luftfeder wie zuvor beschrieben, wobei die Luftfeder mindestens ein erstes Kontaktelement und mindestens ein zweites Kontaktelement aufweist, welche ausgebildet sind, einander kontaktieren zu können. Das Fahrzeug ist dadurch gekennzeichnet, dass in dem ersten Kontaktelement mindestens ein erster Transponder eingebettet ist, der von der dem zweiten Kontaktelement zugewandten Oberfläche des ersten Kontaktelements um ein erstes vorbestimmtes Maß beabstandet ist, oder umgekehrt. Dies kann die Umsetzung und Nutzung von erfindungsgemäßen Luftfedern bei Fahrzeugen wie insbesondere bei Straßenfahrzeugen und bzw. oder bei Schienenfahrzeugen ermöglichen.

Zwei Ausführungsbeispiele und weitere Vorteile der Erfindung werden nachstehend im Zusammenhang mit den folgenden Figuren erläutert. Darin zeigt:
- Fig. 1: eine schematische Schnittdarstellung einer erfindungsgemäßen Luftfeder gemäß eines ersten Ausführungsbeispiels;
- Fig. 2: einen Ausschnitt der Fig. 1;
- Fig. 3: eine schematische Schnittdarstellung einer erfindungsgemäßen Luftfeder gemäß eines zweiten Ausführungsbeispiels; und
- Fig. 4: einen Ausschnitt der Fig. 3.

Die Beschreibung der o.g. Figuren erfolgt in kartesischen Koordinaten mit einer Längsrichtung X, einer zur Längsrichtung X senkrecht ausgerichteten Querrichtung (nicht dargestellt) sowie einer sowohl zur Längsrichtung X als auch zur Querrichtung senkrecht ausgerichteten vertikalen Richtung Z. Die Längsrichtung X kann auch als Tiefe X, die Querrichtung auch als Breite und die vertikale Richtung Z auch als Höhe Z bezeichnet werden.

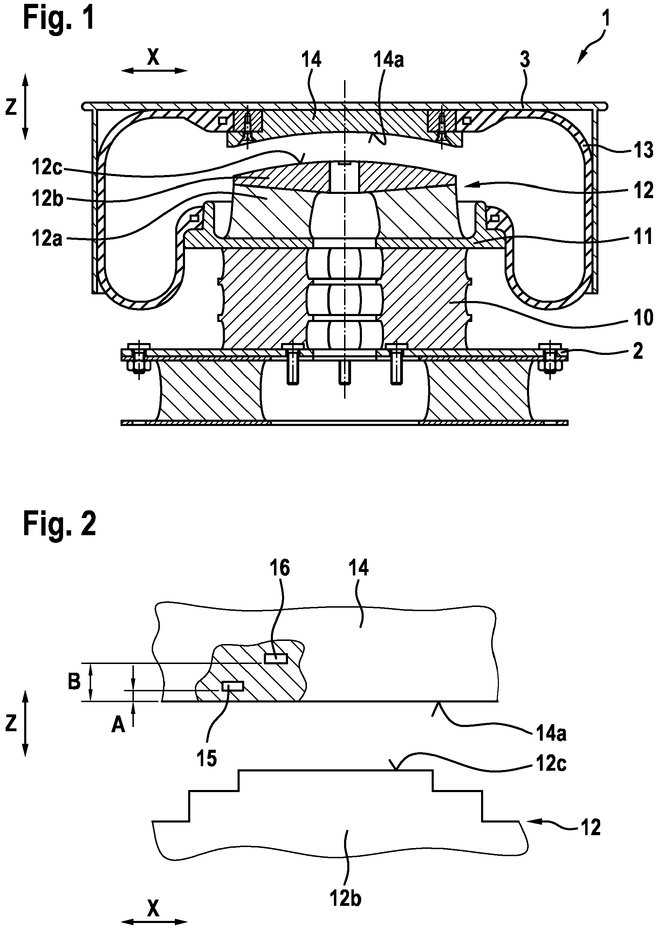

Fig. 1 zeigt eine schematische Schnittdarstellung einer erfindungsgemäßen Luftfeder 1 gemäß eines ersten Ausführungsbeispiels. Fig. 2 zeigt einen Ausschnitt der Fig. 1. Betrachtet wird hierbei eine Luftfeder 1 für Schienenfahrzeuge. Die Luftfeder 1 kann auch als Luftfedereinrichtung 1 bezeichnet werden.

Die Luftfeder 1 weist einen Kolben 10 auf, welcher auf einem Fahrgestell 2 eines Fahrzeugs wie in diesem Ausführungsbeispiels eines Schienenfahrzeugs befestigt ist. Auf dem Kolben 10 ist eine Halterung 11 angeordnet, welche radial außenseitig einen Balg 13 an dessen unterem Ende hält. Die Halterung 11 kann daher auch als Kragen 11 bezeichnet werden. An seinem oberen Ende wird der Balg 13 in diesem Ausführungsbeispiel von einer Gleitplatte 14 gehalten, welche mit einer Karosserie 3 des Fahrzeugs verbunden ist. Innerhalb des Volumens der Luftfeder 1, welches zumindest im Wesentlichen von dem Balg 13, der Halterung 11 und der Gleitplatte 14 eingeschlossen wird, ist oben auf der Halterung 11 eine Notfeder 12 angeordnet. Die Notfeder 12 weist eine Gummifeder 12a und ein Gleitelement 12b auf, welche sich in dieser Reihenfolge von der Halterung 11 in der Höhe Z nach oben erstrecken. Das Gleitelement 12b weist eine Oberfläche 12c in Form einer Gleitfläche 12c auf, welche in der Höhe Z nach oben gerichtet ist.

Ferner weist die Gleitplatte 14 eine Oberfläche 14a in Form einer Gleitfläche 14a auf, welcher der Oberfläche 12c der Notfeder 12 zugewandt ist und sich ebenfalls innerhalb des Volumens der Luftfeder 1 befindet.

Setzt die Gleitplatte 14 auf der Notfeder 12 auf, so kommen die Gleitfläche 14a der Gleitplatte 14 und die Gleitfläche 12c der Notfeder 12 in Kontakt, weshalb die Notfeder 12 auch als erstes Kontaktelement 12 und die Gleitplatte 14 auch als zweites Kontaktelement 14 bezeichnet werden können. Zwar ist dieser Kontakt in gewissen Situationen gewünscht, jedoch kann der Kontakt zu einem Abrieb wenigstens einer der beiden Gleitflächen 14a, 12c führen, welcher bisher lediglich durch die Inspektion dieser Gleitflächen 14a, 12c erkannt werden kann. Dies erfordert die Demontage der Luftfeder 1, um die beiden Gleitflächen 14a, 12c in Inneren des Balges 13 zugänglich zu machen.

Um die Demontage zu vermeiden sowie um die Überprüfung der Abnutzung wenigstens einer der beiden Gleitflächen 14a, 12c zu verbessern, sind in dem vorliegenden Ausführungsbeispiel zwei RFID-Transponder 15, 16 in der Gleitplatte 14 eingebettet. Dabei weist der erste RFID-Transponder 15 einen ersten vertikalen Abstand A zu der Gleitfläche 14a der Gleitplatte 14 und der zweite RFID-Transponder 16 einen zweiten vertikalen Abstand B zu der Gleitfläche 14a der Gleitplatte 14 auf, wobei der erste Abstand A geringer als der zweite Abstand B ist.

Kommen die Gleitfläche 12c der Notfeder 12 und die Gleitfläche 14a der Gleitplatte 14 in Kontakt, entsteht dabei ein Verschleiß der Gleitfläche 14a der Gleitplatte 14. Dabei wird Material von der Gleitfläche 14a der Gleitplatte 14 abgetragen.

Erreicht der Abtrag ein Ausmaß, das dem Abstand A entspricht, ist der erste RFID-Transponder 15 freigelegt und wird bei weiterem Verschleiß zerstört. Eine Rückmeldung durch den ersten RFID-Transponder 15 ist dann nicht mehr möglich, so dass bei der Überprüfung der Luftfeder 1 durch ein externes, hier nicht gezeigtes Lesegerät das Fehlen des ersten RFID-Transponders 15 bemerkbar ist. Dieses Fehlen ist als Warnstufe für den Verschleiß definierbar.

Schreitet der Verschleiß weiter voran und erreicht einen Abtrag, der dem Abstand B der ursprünglichen Gleitfläche 14a der Gleitplatte 14 entspricht, wird nun auch der zweite RFID-Transponder 16 zerstört. Bei der Überprüfung ist das Fehlen der Rückmeldung des zweiten RFID-Transponders 16 als Erreichen der Verschleißgrenze interpretierbar.

Da die beiden Transponder 15 und 16 von sehr einfacher und kleiner Bauart sein können, sind sie preiswert und einfach in die Gleitplatte 14 einbettbar. Auf diese Weise ist eine sehr einfache und zuverlässige Verschleiß erfassung ohne die Demontage der Luftfeder 1 von außen möglich.

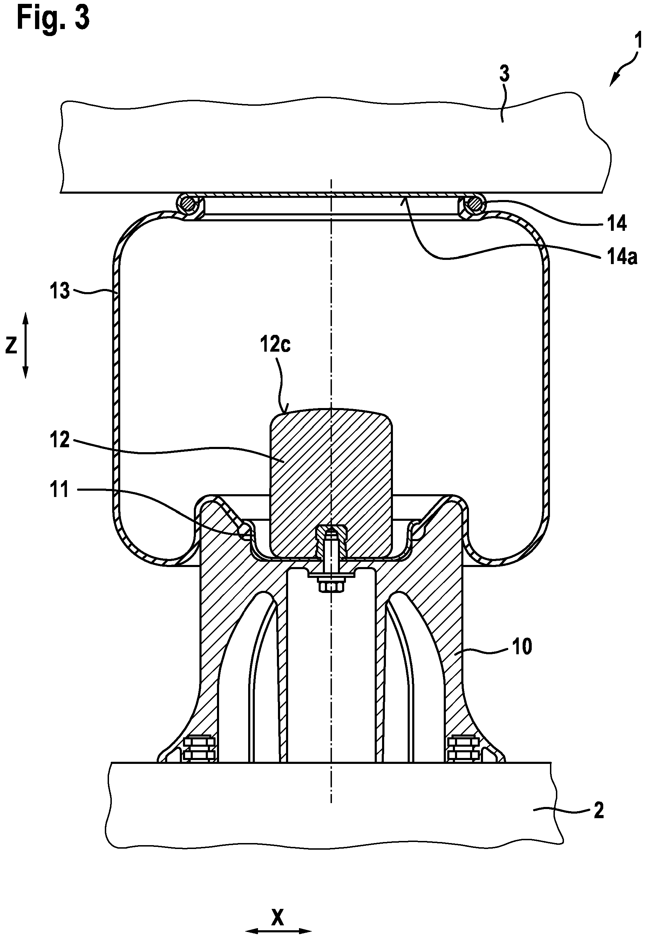

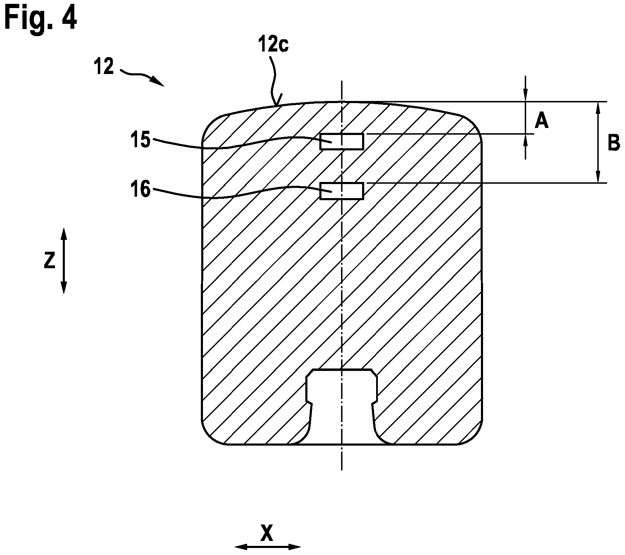

Fig. 3 zeigt eine schematische Schnittdarstellung einer erfindungsgemäßen Luftfeder 1 gemäß eines zweiten Ausführungsbeispiels. Fig. 4 zeigt einen Ausschnitt der Fig. 3. Die Luftfeder 1 des zweiten Ausführungsbeispiels ist zur Verwendung bei einem Straßenfahrzeug ausgebildet. Das erste Kontaktelement 12 stellt somit einen Puffer 12 und das zweite Kontaktelement 14 eine Bördelplatte 14 dar, wie eingangs erläutert.

Da bei einer Luftfeder 1 für Straßenfahrzeuge der Puffer 12 dem Abrieb unterliegt, sind die beiden RFID-Transponder 15, 16 entsprechend im Puffer 12 eingebettet, wie zuvor anhand des ersten Ausführungsbeispiels erläutert. Auch in dieser Anordnung können die zuvor beschriebenen erfindungsgemäßen Funktionen realisiert werden.

In diesem Fall kann der Puffer 12 beispielsweise eine Höhe von 110 mm aufweisen und ein Abtrieb von 25 mm als kritisch anzusehen sein. Der erste Abstand A kann dann beispielsweise ca. 20 mm und der zweite Abstand B beispielsweise ca. 23 mm betragen.

### Bezugszeichenliste (Teil der Beschreibung)

- A: vertikaler Abstand zwischen erstem Transponder 15 und Oberfläche 12c/14a des ersten Kontaktelements 12 bzw. des zweiten Kontaktelements 14a
- B: vertikaler Abstand zwischen zweitem Transponder 16 und Oberfläche 12c/14a des ersten Kontaktelements 12 bzw. des zweiten Kontaktelements 14a
- X: Längsrichtung; Tiefe
- Z: vertikale Richtung; Höhe

- 1: Luftfeder; Luftfedereinrichtung
- 10: Kolben
- 11: Halterung; Kragen
- 12: erstes Kontaktelement; Notfeder; Puffer
- 12a: Gummifeder
- 12b: Gleitelement
- 12c: Gleitfläche bzw. Oberfläche des ersten Kontaktelements 12
- 13: Balg
- 14: zweites Kontaktelement; Gleitplatte; Bördelplatte
- 14a: Gleitfläche bzw. Oberfläche des zweiten Kontaktelements 14
- 15: erster Transponder; erster RFID-Transponder; RFID-Chip
- 16: zweiter Transponder; zweiter RFID-Transponder; zweiter RFID-Chip

- 2: Fahrgestell; Achse

- 3: Karosserie; Chassis

## Patentansprüche

1. Luftfeder (1), insbesondere für Straßenfahrzeuge und/oder für Schienenfahrzeuge, mindestens aufweisend
mindestens ein erstes Kontaktelement (12) und
mindestens ein zweites Kontaktelement (14),
welche ausgebildet sind, einander kontaktieren zu können,
**dadurch gekennzeichnet, dass**
in dem ersten Kontaktelement (12) mindestens ein erster Transponder (15) eingebettet ist, der von der dem zweiten Kontaktelement (14) zugewandten Oberfläche (12c) des ersten Kontaktelements (12) um ein erstes vorbestimmtes Maß (A) beabstandet ist, oder umgekehrt,
wobei der Transponder (15) ausgebildet ist, mittels eines Lesegerätes zu einer Signalabgabe, welches von einem Lesegerät erfassbar ist, anregt zu werden.

2. Luftfeder (1) nach Anspruch 1, **dadurch gekennzeichnet, dass**
in dem ersten Kontaktelement (12) ferner mindestens ein zweiter Transponder (16) eingebettet ist, der von der dem zweiten Kontaktelement (14) zugewandten Oberfläche (12c) um ein zweites vorbestimmtes Maß (B) beabstandet ist,
wobei der erste vorbestimmte Abstand (A) kleiner ist als der zweite vorbestimmte Abstand (B).

3. Luftfeder (1) nach Anspruch 1 oder 2, **dadurch gekennzeichnet, dass**
der erste Transponder (15), vorzugsweise und/oder der zweite Transponder (16), einen RFID-Transponder (15; 16) aufweist oder ein RFID-Transponder (15; 16) ist.

4. Luftfeder (1) nach einem der vorangehenden Ansprüche, **dadurch gekennzeichnet, dass**
das erste Kontaktelement (12) ein Puffer (12) und das zweite Kontaktelement (14) eine Bördelplatte (14) der Luftfeder sind,
wobei wenigstens der erste Transponder (15), vorzugsweise und wenigstens der zweite Transponder (16), in dem Puffer (12) eingebettet ist.

5. Luftfeder (1) nach einem der Ansprüche 1 bis 4, **dadurch gekennzeichnet, dass**
das erste Kontaktelement (12) eine Notfeder (12) und das zweite Kontaktelement (14) eine Gleitplatte (14) der Luftfeder sind,
wobei wenigstens der erste Transponder (15), vorzugsweise und wenigstens der zweite Transponder (16), in der Notfeder (12) eingebettet ist.

6. Fahrzeug mit
wenigstens einer Luftfeder (1) nach einem der vorangehenden Ansprüche,
wobei die Luftfeder (1) mindestens ein erstes Kontaktelement (12) und mindestens ein zweites Kontaktelement (14) aufweist, welche ausgebildet sind, einander kontaktieren zu können,
**dadurch gekennzeichnet, dass**
in dem ersten Kontaktelement (12) mindestens ein erster Transponder (15) eingebettet ist, der von der dem zweiten Kontaktelement (14) zugewandten Oberfläche (12c) des ersten Kontaktelements (12) um ein erstes vorbestimmtes Maß (A) beabstandet ist, oder umgekehrt.

## Claims

1. Air spring (1), in particular for road vehicles and/or for rail vehicles, at least having
at least one first contact element (12) and
at least one second contact element (14) which are configured so as to be able to contact one another,
**characterized in that**
at least one first transponder (15) is embedded in the first contact element (12), said first transponder being spaced apart from that surface (12c) of the first contact element (12) that faces the second contact element (14) by a first predetermined dimension (A), or vice versa, wherein the transponder (15) by means of a scanning apparatus is configured so as to be able to be excited so as to emit a signal which is able to be detected by a scanning apparatus.

2. Air spring (1) according to Claim 1, **characterized in that**
at least one second transponder (16) is furthermore embedded in the first contact element (12), said second transponder being spaced apart from that surface (12c) that faces the second contact element (14) by a second predetermined dimension (B), wherein the first predetermined spacing (A) is smaller than the second predetermined spacing (B).

3. Air spring (1) according to Claim 1 or 2, **characterized in that**
preferably the first transponder (15) and/or the second transponder (16) have/has a RFID transponder (15; 16) or are/is a RFID transponder (15; 16).

4. Air spring (1) according to one of the preceding claims, **characterized in that**
the first contact element (12) is a buffer (12), and the second contact element (14) is a flanged plate (14) of the air spring,
wherein preferably at least the first transponder (15) and at least the second transponder (16) are embedded in the buffer (12).

5. Air spring (1) according to one of Claims 1 to 4, **characterized in that**
the first contact element (12) is an emergency spring (12) and the second contact element (14) is a friction plate (14) of the air spring, wherein preferably at least the first transponder (15) and at least the second transponder (16) are embedded in the emergency spring (12).

6. Vehicle having at least one air spring (1) according to one of the preceding claims,
wherein the air spring (1) has at least one first contact element (12) and at least one second contact element (14), said contact elements being configured so as to be able to contact one another,
**characterized in that**
at least one first transponder (15) is embedded in the first contact element (12), said first transponder being spaced apart from that surface (12c) of the first contact element (12) that faces the second contact element (14) by a first predetermined dimension (A), or vice versa.

## Revendications

1. Ressort pneumatique (1), destiné notamment à des véhicules routiers et/ou des véhicules ferroviaires, ledit ressort comportant au moins
au moins un premier élément de contact (12) et
au moins un deuxième élément de contact (14) qui sont conçus pour pouvoir entrer en contact l'un avec l'autre,
**caractérisé en ce que**
au moins un premier transpondeur (15) est incorporé dans le premier élément de contact (12) et est espacé, d'une première dimension prédéterminée (A), de la surface (12c) du premier élément de contact (12) qui est dirigée vers le deuxième élément de contact (14), ou inversement,
le transpondeur (15) étant conçu pour être excité au moyen d'un dispositif de lecture pour émettre un signal qui peut être détecté par un dispositif de lecture.

2. Ressort pneumatique (1) selon la revendication 1, **caractérisé en ce que**
en outre au moins un deuxième transpondeur (16) est incorporé dans le premier élément de contact (12) et est espacé, d'une deuxième dimension prédéterminée (B), de la surface (12c) dirigée vers le deuxième élément de contact (14),
la première distance prédéterminée (A) étant inférieure à la deuxième distance prédéterminée (B).

3. Ressort pneumatique (1) selon la revendication 1 ou 2, **caractérisé en ce que** le premier transpondeur (15), de préférence et/ou le deuxième transpondeur (16), comporte un transpondeur RFID (15 ; 16) ou est un transpondeur RFID (15 ; 16).

4. Ressort pneumatique (1) selon l'une des revendications précédentes, **caractérisé en ce que**
le premier élément de contact (12) est un tampon (12) et le deuxième élément de contact (14) est une plaque à rebord (14) du ressort pneumatique,
au moins le premier transpondeur (15), de préférence et au moins le deuxième transpondeur (16), étant incorporé dans le tampon (12).

5. Ressort pneumatique (1) selon l'une des revendications 1 à 4, **caractérisé en ce que**
le premier élément de contact (12) est un ressort de secours (12) et le deuxième élément de contact (14) est une plaque coulissante (14) du ressort pneumatique,
au moins le premier transpondeur (15), de préférence et au moins le deuxième transpondeur (16), étant incorporé dans le ressort de secours (12).

6. Véhicule comprenant
au moins un ressort pneumatique (1) selon l'une des revendications précédentes,
le ressort pneumatique (1) comportant au moins un premier élément de contact (12) et au moins un deuxième élément de contact (14) qui sont conçus pour pouvoir entrer en contact l'un avec l'autre,
**caractérisé en ce que**
au moins un premier transpondeur (15) est incorporé dans le premier élément de contact (12) et est espacé, d'une première dimension prédéterminée (A), de la surface (12c) du premier élément de contact (12) qui est dirigée vers le deuxième élément de contact (14) ou inversement.
